# EUROPÄISCHE PATENTSCHRIFT

(11) **EP 2 478 996 B1**
(45) Veröffentlichungstag und Bekanntmachung des Hinweises auf die Patenterteilung: **12.03.2014**
(21) Anmeldenummer: 12152056.3
(22) Anmeldetag: 23.01.2012
(51) Int. Cl.: B23Q 3/155

(54) **Werkzeugwechsler**
Tool changer
Dispositif de changement d'outil

(30) Priorität: 24.01.2011 DE 202011001868 U
(43) Veröffentlichungstag der Anmeldung: 25.07.2012
(73) Patentinhaber: Schneider, Peter, 87459 Pfronten (DE)
(72) Erfinder: Schneider, Peter, 87459 Pfronten (DE)
(74) Vertreter: Charrier, Rapp & Liebau

(56) Entgegenhaltungen:
- DE-A1- 10 354 441
- US-A1- 2008 317 560

## Beschreibung

Die Erfindung betrifft einen Werkzeugwechsler nach dem Oberbegriff des Anspruchs 1. Ein derartiger Werkzeugwechsler ist aus der US 2008/0317560 A1 bekannt.

Derartige Werkzeugwechsler werden üblicherweise für einen automatischen Werkzeugwechsel zum Werkzeugtransport zwischen einem Werkzeugmagazin und einer Arbeitsspindel einer Werkzeugmaschine eingesetzt. Die Greiferanordnungen führen hierbei in der Regel eine mit Hilfe eines geeigneten Antriebs erzeugte Hub- und Schwenkbewegung aus, wobei die Hubbewegung zum Herausziehen oder Einsetzen der Werkzeuge oder Werkzeugaufnahmen aus der bzw. in die Arbeitsspindel und dem Einlegen bzw. der Entnahme der Werkzeuge oder Werkzeugaufnahmen an einen Werkzeugmagazin dient, während die Schwenkbewegung zum Transport der Werkzeuge zwischen der Arbeitsspindel und dem Werkzeugmagazin benötigt wird. Bei bekannten Werkzeugwechslern wird die erforderlich Hub- und Schwenkbewegung vielfach über ein Kurvengetriebe erzeugt. Solche Kurvengetriebe benötigen zwar nur einen Antriebsmotor, jedoch ist die Herstellung der Kurvengetriebe aufwändig.

Bei dem in der US 2008/0317560 A1 offenbarten Werkzeugwechsler ist die Greiferanordnung auf einer innerhalb einer Mutter verdrehgesichert geführten und mittels eines Kolbenantriebs gegenüber der Mutter axial verschiebbaren Antriebswelle angeordnet. Die Mutter ist in einen Gehäuse drehbar gelagert und mittels eines Gewindeantriebs drehbar.

Aufgabe der Erfindung ist es, einen Werkzeugwechsler der eingangs genannten Art zu schaffen, der einfach aufgebaut ist und kostengünstig herstellbar ist.

Diese Aufgabe wird durch einen Werkzeugwechsler mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Werkzeugwechsler umfasst der Antrieb zur Axialverschiebung der Welle gegenüber der Mutter einen Kugelgewindetrieb mit einer Kugelumlaufmutter und einer motorisch angetriebenen Kugelumlaufspindel, wobei die Kugelumlaufmutter über eine Verbindungshülse mit der Welle verbunden ist. Ein wesentlicher Vorteil des erfindungsgemäßen Werkzeugwechslers besteht darin, dass nur wenige Teile benötigt werden und dennoch ein äußerst präziser Antrieb ermöglicht wird. Die Antriebselemente benötigen nur einen geringen Bauraum, so dass der Werkzeugwechsler außerdem in einer kompakten Bauweise hergestellt werden kann.

Die Kugelumlaufspindel kann von einem Motor direkt oder über einen Riementrieb oder dgl. angetrieben sein. Die Kugelumlaufmutter ist axial verschiebbar und gegen Verdrehung gesichert innerhalb des Gehäuses geführt. Dies kann z.B. dadurch erfolgen, dass an der mit der Kugelumlaufmutter fest verbunden Verbindungshülse ein Führungsstein befestigt ist, der in einer Längsnut des Gehäuses verschiebbar geführt ist.

Die verdrehgesicherte und eine Axialverschiebung ermöglichende Verbindung zwischen der Antriebswelle und der Mutter ist in bevorzugter Weise als Kugelkeil- oder Kugelnutverbindung ausgeführt. Die z.B. als Keilwelle ausgebildete Antriebswelle ist hier über Kugeln innerhalb einer als Keilnutmutter ausgeführten Mutter axial verschiebbar und gegen Verdrehung gesichert geführt. Die in Kugelkäfigen geführten Kugeln laufen dabei in feingeschliffenen Laufrillen zwischen Antriebwelle und Mutter ab. Dadurch ist eine präzise und leichgängige Führung der Antriebswelle innerhalb der Mutter erreichbar.

Der zur Erzeugung der Schwenkbewegung dienende zweite Antrieb kann ein mit der Mutter verbundenes Zahnrad und ein mit diesem kämmendes Antriebselement in Form einer z.B. mit Hilfe eines Hubszylinders verschiebbaren Zahnstange umfassen. Die Mutter kann aber auch über einen Motor mit Zahnrad oder dgl. angetrieben werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen erfindungsgemäßen Werkzeugwechsler in einer Perspektive;
- **Figur 2**: den Figur 1 gezeigten Werkzeugwechsler in einem Längsschnitt;
- **Figur 3**: den Figur 1 gezeigten Werkzeugwechsler in einer Draufsicht und
- **Figur 4**: die Draufsicht von Figur 3 in einem Querschnitt.

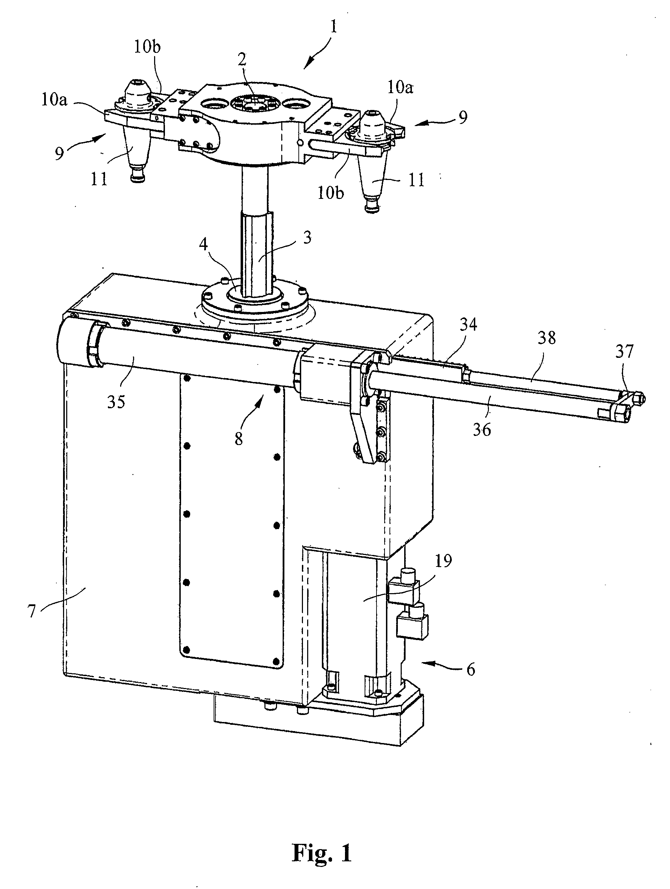

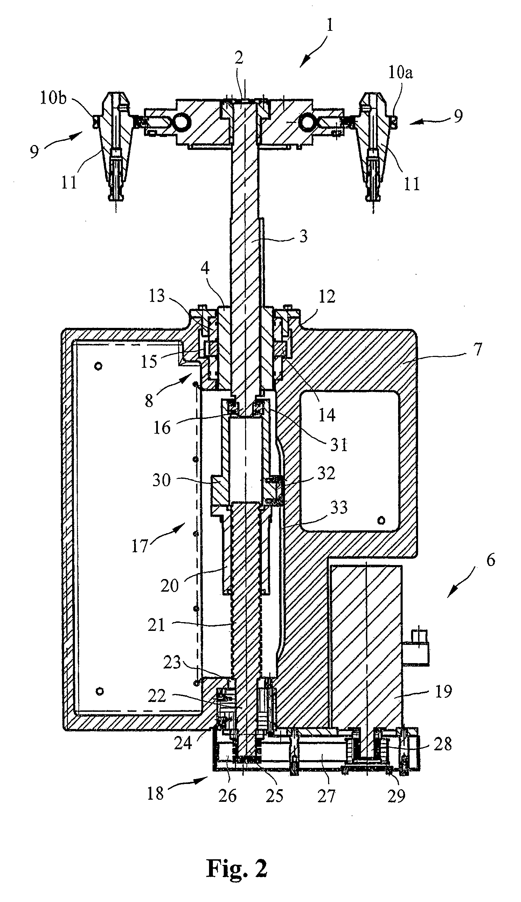

Der in Figur 1 in einer Perspektive dargestellte Werkzeugwechsler enthält eine hier als Doppelgreifer ausgeführte Greiferanordnung 1, die am oberen Ende 2 einer als Keilwelle ausgebildeten Welle 3 befestigt ist. Die hier als Keilwelle ausgeführte Welle 3 ist in innerhalb einer als Keilnutmutter ausgebildeten Mutter 4 in Richtung einer in Figur 2 gekennzeichneten Achse 5 axial verschiebbar und gegenüber der Mutter 4 gegen Verdrehung gesichert geführt und kann durch einen im Weiteren noch näher beschriebenen ersten Antrieb 6 axial verschoben werden. Die als Keilnutmutter ausgeführte Mutter 4 ist innerhalb eines Gehäuses 7 drehbar gelagert und kann durch einen im Folgenden noch näher erläuterten zweiten Antrieb 8 gedreht werden. Die Greiferanordnung 1 weist zwei diametral gegenüberliegende Werkzeuggreifer 9 mit jeweils zwei zangenförmig angeordneten Greiferarmen 10a und 10b zum Ergreifen einer Werkzeugaufnahme 11 oder eines Werkzeugs auf.

Wie aus Figur 2 hervorgeht, ist die Mutter 4 in einer entsprechenden Lagerbohrung 12 an der Oberseite des Gehäuses 7 über Drehlager 13 drehbar gelagert. Die Mutter 4 weist an ihrer Außenseite ein Zahnrad 14 mit einer als Stirnverzahnung ausgeführten Verzahnung 15 auf. Bei der gezeigten Ausführung ist das Zahnrad 14 als gesondertes Bauteil ausgeführt. Die Verzahnung 15 kann aber auch direkt an der Außenseite der Mutter 4 angebracht sein, d.h. die Mutter 4 selbst ist mit einer Außenverzahnung versehen.

Aus Figur 2 ist ersichtlich, dass das untere Ende 16 der Welle 3 über einen hier als Kugelumlaufspindel ausgebildeten Kugelgewindetrieb 17 und einen Riementrieb 18 mit einem Antriebsmotor 19 verbunden ist. Der Kugelgewindetrieb 17 besteht aus einer Kugelumlaufmutter 20 und einer Kugelumlaufspindel 21, deren unterer Teil 22 in einer unteren Lagerbohrung 23 des Gehäuses 7 über ein Drehlager 24 drehbar gelagert ist. Auf einem gegenüber dem Gehäuse 7 nach unten vorstehenden unteren Ende 25 der Kugelumlaufspindel 21 ist eine erste Riemenscheibe 26 befestigt. Die erste Riemenscheibe 26 ist über einen Antriebsriemen 27 mit einer auf der Antriebswelle 28 des Antriebsmotors 19 angeordneten zweiten Riemenscheibe 29 verbunden. Die Kugelumlaufmutter 20 ist über eine Verbindungshülse 30 mit dem unteren Ende 16 der Welle 3 verbunden. Das untere Ende 16 der Welle 3 ist über ein Drehlager 31 in einem oberen Teil der Verbindungshülse 30 drehbar gelagert. An ihrem unteren Teil ist die Verbindungshülse 30 fest mit der Kugelumlaufmutter 20 verbunden. Zur verdrehgesicherten Führung der Kugelumlaufmutter 20 innerhalb des Gehäuses 7 ist an der Außenseite der Verbindungshülse 30 ein Führungsstein 32 befestigt, der in einer parallel zur Achse 5 verlaufenden Längsnut 33 im Gehäuse 7 verschiebbar geführt ist. Durch Drehung der Kugelumlaufsspindel 21 kann die Welle 3 axial verschoben und somit die Greiferanordnung 1 axial bewegt werden. Durch den Kugelgewindetrieb 17, den Riementrieb 18 und den Antriebsmotor 19 wird der erste Antrieb 6 zur Erzeugung einer Hubbewegung der Greiferanordnung 1 gebildet.

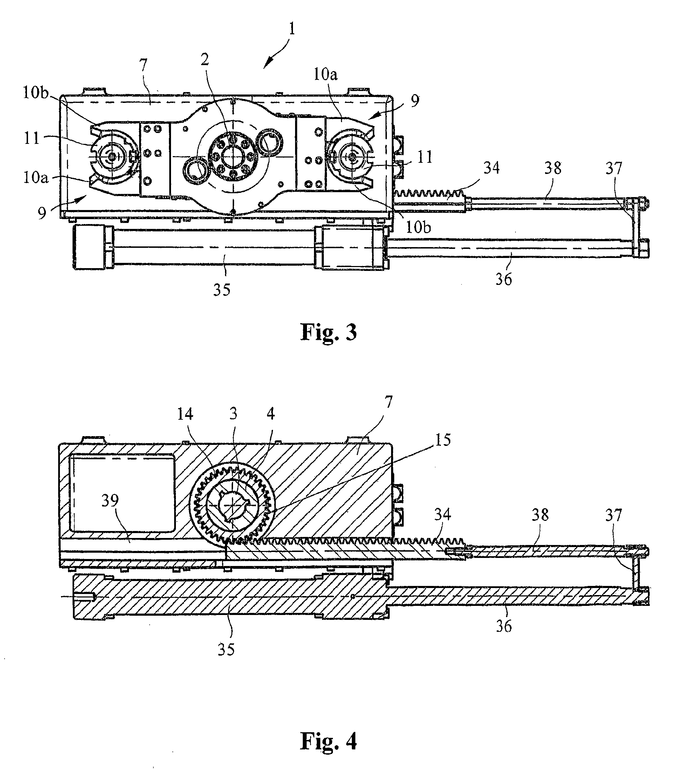

Wie aus Figur 4 hervorgeht, steht das mit der Mutter 3 fest verbundene Zahnrad 14 mit seiner Verzahnung 15 in Eingriff mit einer Zahnstange 34, die in einer im Gehäuse 7 senkrecht zur Achse 4 verlaufenden Durchgangsöffnung 35 verschiebbar angeordnet ist. Der Antrieb der Zahnstange 34 erfolgt über einen an der Außenseite des Gehäuses 7 befestigten Hubzylinder 35, dessen Kolbenstange 36 über einen Quersteg 37 und eine Verbindungsstange 38 mit der Zahnstange 34 verbunden ist. Durch Ein- und Ausfahren der Kolbenstange 36 des Hubzylinders 35 kann somit die Mutter 4 über die Zahnstange 34 und das Zahnrad 14 gedreht und die Greiferanordnung um z.B. 180° verschwenkt werden. Durch den Hubzylinder 35 und den Zahnstangenantrieb mit der Zahnstange 34 und dem Zahnrad 14 wird der zweite Antrieb 8 zur Erzeugung der Schwenkbewegung der Greiferanordnung 1 gebildet.

Die Erfindung ist nicht auf das vorstehend beschriebene und in der Zeichnung dargestellte Ausführungsbeispiel beschränkt. So kann z.B. die Kugelumlaufspindel 21 auch direkt angetrieben sein. Außerdem könnte die Drehung der Mutter 3 auch über einen Motor und ein Zahnrad erfolgen. Auch bei der Greiferanordnung 1 muss es sich nicht zwangsläufig um einen Doppelgreifer handeln. Der Antrieb wäre auch für einen Einfachgreifer oder eine Greiferanordnung mit mehr als zwei Werkzeuggreifern geeignet.

## Patentansprüche

1. Werkzeugwechsler mit einer mittels eines Antriebs um eine Achse (5) drehbaren und in Richtung der Achse (5) verschiebbaren Greiferanordnung (1), die auf einer innerhalb einer Mutter (4) verdrehgesichert geführten und mittels eines ersten Antriebs (6) gegenüber der Mutter (4) axial verschiebbaren Welle (3) sitzt, wobei die Mutter (4) in einen Gehäuse (7) drehbar gelagert und mittels eines zweiten Antriebs (8) drehbar ist, **dadurch gekennzeichnet, dass** der erste Antrieb (6) einen Kugelgewindetrieb (17) mit einer Kugelumlaufmutter (20) und einer motorisch angetriebenen Kugelumlaufspindel (21) umfasst, wobei die Kugelumlaufmutter (20) über eine Verbindungshülse (30) mit der Welle (3) verbunden ist.

2. Werkzeugwechsler nach Anspruch 1, **dadurch gekennzeichnet, dass** die Welle (3) als Keilwelle und die Mutter (4) als zugehörige Keilnutmutter ausgebildet ist.

3. Werkzeugwechsler nach Anspruch 1 oder 2, **dadurch gekennzeichnet, dass** die Kugelumlaufspindel (21) von einem Antriebsmotor (19) über einen Riementrieb (18) angetrieben wird.

4. Werkzeugwechsler nach einem der Ansprüche 1 bis 3, **dadurch gekennzeichnet, dass** ein unteres Ende (16) der Welle (3) über ein Drehlager (31) in einem oberen Teil der Verbindungshülse (30) drehbar gelagert ist.

5. Werkzeugwechsler nach einem der Ansprüche 1 bis 4, **dadurch gekennzeichnet, dass** die Kugelumlaufmutter (20) axial verschiebbar und gegen Verdrehung gesichert innerhalb des Gehäuses (7) geführt ist.

6. Werkzeugwechsler nach einem der Ansprüche 1 bis 5, **dadurch gekennzeichnet, dass** an der mit der Kugelumlaufmutter (20) fest verbunden Verbindungshülse (30) ein Führungsstein (32) befestigt ist, der in einer Längsnut (33) des Gehäuses (7) verschiebbar geführt ist.

7. Werkzeugwechsler nach einem der Ansprüche 1 bis 6, **dadurch gekennzeichnet, dass** der zweite Antrieb (8) ein mit der Mutter (4) verbundenes Zahnrad (14) und ein mit diesem kämmendes Antriebselement umfasst.

8. Werkzeugwechsler nach Anspruch 7, **dadurch gekennzeichnet, dass** das mit dem Zahnrad (14) kämmende Antriebselement eine motorisch bewegbare Zahnstange (34) ist.

9. Werkzeugwechsler nach Anspruch 8, **dadurch gekennzeichnet, dass** die Zahnstange (34) über einen Hubzylinder (35) verschiebbar ist.

10. Werkzeugwechsler nach einem der Ansprüche 1 bis 9, **dadurch gekennzeichnet, dass** die Greiferanordnung (1) zwei diametral gegenüberliegende Werkzeuggreifer (9) enthält.

## Claims

1. Tool changer with a gripper arrangement (1) which by means of a drive is rotatable about an axis (5) and displaceable in the direction of the axis (5) and sits on a shaft (3) which is guided, secured against rotation, inside a nut (4) and displaceable axially in relation to the nut (4) by means of a first drive (6), the nut (4) being mounted rotatably in a housing (7) and rotatable by means of a second drive (8), **characterised in that** the first drive (6) comprises a ball screw (17) with a recirculating ball nut (20) and a motor driven recirculating ball spindle (21), the recirculating ball nut (20) being connected to the shaft (3) by means of a connecting sleeve (30).

2. Tool changer according to claim 1, **characterised in that** the shaft (3) is embodied as a splined shaft and the nut (4) as an associated female splined nut.

3. Tool changer according to claim 1 or 2, **characterised in that** the recirculating ball spindle (21) is driven by a driving motor (19) through a belt drive (18),

4. Tool changer according to one of claims 1 to 3, **characterised in that** a lower end (16) of the shaft (3) is mounted rotatably in an upper part of the connecting sleeve (30) by means of a pivot bearing (31).

5. Tool changer according to one of claims 1 to 4, **characterised in that** the recirculating ball nut (20) is guided so as to be displaceable axially and secured so that it cannot turn inside the housing (7).

6. Tool changer according to one of claims 1 to 5, **characterised in that** fastened to the connecting sleeve (30) which is connected securely to the recirculating ball nut (20) there is a guide block (32) which is guided displaceably in a longitudinal groove (33) of the housing (7).

7. Tool changer according to one of claims 1 to 6, **characterised in that** the second drive (8) comprises a gear wheel (14) which is connected to the nut (4), and a driving element which is in mesh with the gear wheel.

8. Tool changer according to claim 7, **characterised in that** the driving element which is in mesh with the gear wheel (14) is a toothed rack (34) which can be moved by motor.

9. Tool changer according to claim 8, **characterised in that** the toothed rack (34) is displaceable by means of an actuating cylinder (35).

10. Tool changer according to one of claims 1 to 9, **characterised in that** the gripper arrangement (1) comprises two diametrically opposed tool grippers (9).

## Revendications

1. Dispositif de changement d'outil comprenant un ensemble de préhension (1) pouvant tourner autour d'un axe (5) au moyen d'un mécanisme d'entraînement, et pouvant être déplacé par coulissement dans la direction de l'axe (5), lequel ensemble de préhension se trouve sur un arbre (3), guidé de manière à empêcher toute torsion à l'intérieur d'un écrou (4), et pouvant être déplacé par coulissement de manière axiale par rapport à l'écrou (4) au moyen d'un premier mécanisme d'entraînement (6), sachant que l'écrou (4) est logé de manière à pouvoir tourner dans un boîtier (7) et peut tourner au moyen d'un deuxième mécanisme d'entraînement (8), **caractérisé en ce que** le premier mécanisme d'entraînement (6) comprend une vis d'entraînement à billes (17) dotée d'un écrou à billes (20) et d'une broche à billes (21) à entraînement motorisé, sachant que l'écrou à billes (20) est relié à l'arbre (3) par l'intermédiaire d'un manchon de raccordement (30).

2. Dispositif de changement d'outil selon la revendication 1, **caractérisé en ce que** l'arbre (3) est réalisé sous la forme d'un arbre cannelé, et **en ce que** l'écrou (4) est réalisé sous la forme d'un écrou cannelé associé.

3. Dispositif de changement d'outil selon la revendication 1 ou 2, **caractérisé en ce que** la broche à billes (21) est entraînée par un moteur d'entraînement (19) par l'intermédiaire d'un mécanisme d'entraînement à courroie (18).

4. Dispositif de changement d'outil selon l'une quelconque des revendications 1 à 3, **caractérisé en ce qu'**une extrémité (16) inférieure de l'arbre (3) est logée de manière à pouvoir tourner dans une partie supérieure du manchon de raccordement (30) par l'intermédiaire d'un palier rotatif (31).

5. Dispositif de changement d'outil selon l'une quelconque des revendications 1 à 4, **caractérisé en ce que** l'écrou à billes (20) est guidé de manière à pouvoir être déplacé axialement par coulissement et est guidé à l'intérieur du boîtier (7) de manière à empêcher toute torsion.

6. Dispositif de changement d'outil selon l'une quelconque des revendications 1 à 5, **caractérisé en ce qu'**un galet de guidage (32) qui est guidé de manière à pouvoir être déplacé par coulissement dans une rainure longitudinale (33) du boîtier (7), est fixé au niveau du manchon de raccordement (30) relié de manière solidaire à l'écrou à billes (20).

7. Dispositif de changement d'outil selon l'une quelconque des revendications 1 à 6, **caractérisé en ce que** le deuxième mécanisme d'entraînement (8) comprend une roue dentée (14) reliée à l'écrou (4) et un élément d'entraînement s'engrenant avec ladite roue dentée.

8. Dispositif de changement d'outil selon la revendication 7, **caractérisé en ce que** l'élément d'entraînement s'engrenant avec la roue dentée (14) est une crémaillère (34) pouvant être déplacée de manière motorisée.

9. Dispositif de changement d'outil selon la revendication 8, **caractérisé en ce que** la crémaillère (34) peut être déplacée par coulissement par l'intermédiaire d'un vérin de levage (35).

10. Dispositif de changement d'outil selon l'une quelconque des revendications 1 à 9, **caractérisé en ce que** l'ensemble de préhension (1) contient deux systèmes de préhension d'outil (9) diamétralement opposés.
